# EUROPÄISCHE PATENTSCHRIFT

(11) **EP 1 449 713 B1**
(45) Veröffentlichungstag und Bekanntmachung des Hinweises auf die Patenterteilung: **18.01.2012**
(21) Anmeldenummer: 04090055.7
(22) Anmeldetag: 17.02.2004
(51) Int. Cl.: B60N 2/48, A47C 7/38

(54) **Kopfstütze mit verschiebbarem Kopfstützenauflageteil und Kopfstützen-Komfortflügeln**
Headrest with slidable head supporting element and comfort wings
Appui-tête avec support de tête coulissant et coussins latéraux de confort

(30) Priorität: 24.02.2003 DE 10308569
(43) Veröffentlichungstag der Anmeldung: 25.08.2004
(73) Patentinhaber: Volkswagen Aktiengesellschaft, 38436 Wolfsburg (DE)
(72) Erfinder: Schweissgut, Jakob, 38542 Leiferde (DE); Albrecht, Bjoern, 38527 Meine (DE)
(74) Vertreter: Schneider, Henry

(56) Entgegenhaltungen:
- WO-A-95/09742
- DE-A1- 10 005 196
- DE-C2- 19 602 909
- DE-U1- 20 205 348
- US-A- 5 586 810

## Beschreibung

Die vorliegende Erfindung betrifft eine Kopfstütze für einen Fahrzeugsitz mit den im Oberbegriff des Anspruchs 1 genannten Merkmalen.

Es ist allgemein bekannt, höhenverstellbare Kopfstützen in Kraftfahrzeugen, insbesondere Pkws/Lkws, über Kopfstützhalterungen an Fahrzeugsitzen auszuführen. Die bekannten Kopfstützen bieten dem Sitzbenutzer bei gerader und auch nach hinten geneigter Rückenlehne die Möglichkeit, den Kopf an der Kopfstütze anzulehnen. Die allgemein bekannten Kopfstützen dienen neben der Einnahme einer bequemen Sitzhaltung vor allen Dingen auch dazu, bei einem Unfall einen entsprechenden Widerhalt des Kopfes beziehungsweise des Genickes der entsprechenden Person zu gewährleisten. So haben ein Fahrzeugsitz und die zugehörige Kopfstütze im Wesentlichen sicherheitstechnische Aspekte zu erfüllen. Dies gilt insbesondere für die zumeist einstellbare Höhenposition der Kopfstütze, die zumeist über die höhenverstellbaren Kopfstützhalterungen realisiert wird, sowie auch für die ausgebildete Kontur der Kopfstütze.

Aus dem Stand der Technik sind gerade in letzter Zeit weitere Lösungen bekannt, die neben den sicherheitstechnischen Aspekten vor allem einer Erhöhung des Fahrkomforts der Fahrzeugbenutzer durch weitere, meist die Form des Sitzes und/oder der Kopfstütze betreffende Maßnahmen dienen.

So sind aus dem Gebrauchsmuster DE 94 20 870 U1 seitliche Kopfhalter an Kopfstützen bekannt, die als Verlängerung der Sitzrückenlehnen ausgebildet sind und sich beidseitig des Kopfes des Sitzbenutzers pneumatisch aufblasen lassen. Eine ähnliche Lösung offenbart die WO 96/28318, in der ein oberer Stützkörper zwischen Kopfstütze und Rückenlehne in Verlängerung der Rückenlehne in Kopfhöhe vorgesehen ist. Auf der Frontseite des oberen Stützkörpers und/oder in diese integriert befinden sich mindestens zwei horizontal voneinander beabstandete Mittel zur seitlichen Abstützung des Kopfes.

Weitere mechanische, kinematische Lösungen zur Komforterhöhung von Kopfstützen, insbesondere zur Anordnung von seitlich an der Kopfstütze angebrachten Elementen, sind aus dem Stand der Technik entnehmbar. Die Patentschrift DE 196 02 909 C2 beschreibt eine Kopfstütze für Fahrzeugsitze, an der an ihrer Vorderseite eine Anlagefläche für den Kopf des Sitzbenutzers ausgebildet ist, welche in zumindest einem seitlich von der vertikalen Mittelebene der Kopfstütze liegenden Teilbereich in unterschiedliche Positionen einstellbar ist. Dadurch werden verschieden große spitze Winkel mit der vertikalen Mittelebene der Rückenlehne gebildet. Hierbei wird zumindest ein dem einstellbaren Teilbereich zugehöriger Teil des Polsterträgers der Kopfstütze mit der Rückenlehne des Fahrzeugsitzes über eine, eine quer zur vertikalen Mittelebene der Rückenlehne verlaufende Verschiebebewegung zulassende Führungseinrichtung verbunden, welche die Verschiebebewegung in eine Änderung der Winkelstellung des einstellbaren Teilbereiches umsetzt.

Eine weitere Lösung geht aus der Patentschrift DE 197 24 764 hervor. Hierbei handelt es sich um einen Fahrzeugsitz, der keine separate Kopfstütze ausbildet, sondern dessen Rückenlehne in ihrem oberen Bereich an der Vorderseite eines auf einem Polsterträger gehaltenen Polsterkörpers eine Anlagefläche für den Kopf des Sitzbenutzers ausbildet. Zumindest ein seitlich vom Mittenbereich der Rückenlehne liegender einstellbarer Teilbereich des Polsterträgers ist um eine Schwenkachse schwenkbar mit dem Polsterträger des Mittenbereichs über zumindest eine Kupplungseinrichtung verbunden. Mittels dieser Kupplungseinrichtung ist der einstellbare Teilbereich in unterschiedlichen Positionen festlegbar. Die Kupplungseinrichtung weist mindestens ein Scharniergelenk mit einer Rasteinrichtung auf, die eine lösbare Verrastung der zueinander schwenkbaren Scharnierteile in vorgewählten Winkelstellungen ermöglicht.

Eine frühere Offenlegungsschrift der Anmelderin, die DE 197 54 168, stellt eine Kopfstütze mit klappbaren, seitlichen Kopfstützelementen, welche von einer Nichtgebrauchslage in eine Gebrauchslage bringbar sind, dar. Das seitliche Kopfstützelement ist in Nichtgebrauchslage in die Außenkontur der Kopfstütze integriert und durch eine Klappoder Schwenkbewegung aus der Kopfstützenkontur herausklappbar beziehungsweise herausschwenkbar.

Die Druckschrift DE 202 05 348 U1 lehrt eine Kopfstütze für Sitze, welche aus zwei voneinander unabhängig schwenkbaren und höhenverstellbaren Teilen besteht. Die Rückseite dieser Teile bieten dem Kopf eines Sitzbenutzers im ausgeschwenktem Zustand eine Anlagefläche und somit einen seitlichen Halt, wobei die Vorderseite im eingeschwenktem Zustand nur noch als Anlagefläche für den Kopf des Sitzbenutzers dient. Die Druckschrift WO 95/09742 A1 beschreibt eine Kopfstütze nack dem Oberbegriff des Anspruchs 1, die eine gute Verstellbarkeit aufweist. Eine als Kopfstützenauflageteil ausgebildete Struktur ist gegenüber einem Rahmen eines Sitzteiles über einen Verstellmechanismus horizontal und vertikal reversibel verlagerbar. Die Struktur ist gegenüber dem Rahmen schräg angeordnet, so dass sie nicht nur vertikal nach oben und unten beziehungsweise horizontal nach links und rechts, sondern durch ihre Schräglage bei der vertikalen Bewegung der Struktur gleichzeitig nach vorn beziehungsweise nach hinten verlagerbar ist.

Ausgehend von dem hier vorliegenden Stand der Technik liegt der Erfindung die Aufgabe zugrunde, bei einem Fahrzeugsitz der eingangs genannten Art den Komfort und die Sicherheit der darauf sitzenden Fahrzeugsinsassen weiter zu verbessern.

Diese Aufgabe wird in Verbindung mit den Merkmalen des Oberbegriffs des Patentanspruchs 1 erfindungsgemäß dadurch gelöst, dass ein Verstellmechanismus mindestens ein vertikales Führungsmittel und mindestens ein horizontales Führungsmittel aufweist, die über ein Verbindungsmittel miteinander verbunden sind, wodurch ein Kopfstützenauflageteil über den Verstellmechanismus gegenüber einem Kopfstützengrundkörper sowohl in einer ersten horizontalen Raumrichtung in x-Richtung als auch in einer zweiten vertikalen Raumrichtung in y-Richtung und der mindestens eine seitliche erste und zweite Kopfstützen-Komfortflügel gegenüber dem Kopfstützengrundkörper mittels eines ersten und zweiten Verstellelementes zusätzlich in einer dritten Raumrichtung in z-Richtung reversibel verlagerbar ist.

Erfindungsgemäß ist dadurch eine Erhöhung der Sicherheit und eine Komfortverbesserung der Kopfstütze zusätzlich zu der bekannten Höhenverstellbarkeit der heutigen Kopfstützen möglich.

Erfindungsgemäß ist das Kopfstützenauflageteil somit in x-Richtung und y-Richtung gegenüber dem Kopfstützengrundkörper reversibel verlagerbar, wobei die ersten und zweiten Kopfstützen-Komfortflügel ferner in z-Richtung reversibel verlagerbar sind, wodurch sich für den Kopf des Sitzbenutzers komfortable seitliche Anlageflächen bilden.

Eine bevorzugte Ausführung ist es, die seitlichen ersten Kopfstützen-Komfortflügel beziehungsweise zweiten Kopfstützen-Komfortflügel in z-Richtung so zu verlagern, dass sich in einer aufrechten Sitzposition des Sitzbenutzers ein zentraler, mittlerer Auflagebereich an dem mindestens einen Kopfstützenauflageteil für den Hinterkopf beziehungsweise Nacken des Sitzbenutzers ausbildet.

Durch die Anordnung der in einer Ebene liegenden durchgehenden Trennungsfuge zwischen Kopfstützengrundkörper und Kopfstützenauflageteil ist es möglich, dass eine Verlagerung des mindestens einen Kopfstützenauflageteils und/oder seines ersten Kopfstützen-Komfortflügels und/oder seines zweiten Kopfstützen-Komfortflügels in die Raumrichtungen (x-Richtung, y-Richtung, z-Richtung) ausführbar ist.

In bevorzugter Ausführung der Erfindung ist dabei ein Verstellmechanismus in verschiedenen Ausführungsvarianten zwischen Kopfstützengrundkörper und dem mindestens einen Kopfstützenauflageteil oder im Wesentlichen im Kopfstützengrundkörper oder aber im Wesentlichen im mindestens einen Kopfstützenauflageteil angeordnet.

Der Verstellmechanismus der Kopfstütze weist das mindestens eine vertikale Führungsmittel und das mindestens eine horizontale Führungsmittel für das Kopfstützenauflageteil auf. Das mindestens eine vertikale Führungsmittel umfasst zur Verbindung mit dem mindestens einen horizontalen Führungsmittel das Verbindungsmittel.

In einer bevorzugten Ausführung weist das horizontale Führungsmittel zudem ein erstes Verstellelement und ein zweites Verstellelement auf, welches außerdem ein erstes und ein zweites Gelenk oder dergleichen umfasst, die das mindestens eine horizontale Führungsmittel mit dem ersten Verstellelement beziehungsweise dem zweiten Verstellelement verbindet. Erfindungsgemäß stehen die ersten beziehungsweise zweiten Verstellelemente mit den ersten beziehungsweise zweiten Kopfstützen-Komfortflügeln in Kontakt, wodurch eine Verstellung des ersten beziehungsweise zweiten Kopfstützen-Komfortflügels in z-Richtung durchführbar ist.

In weiterer Ausgestaltung der Erfindung ist die Verlagerung des mindestens einen Kopfstützenauflageteils in x-Richtung und/oder y-Richtung und die Verlagerung des mindestens einen ersten Kopfstützen-Komfortflügels und/oder des zweiten Kopfstützen-Komfortflügels in z-Richtung manuell und/oder über Stellantriebe durchführbar. Diese Stellantriebe sind erfindungsgemäß elektrisch, pneumatisch sowie hydraulisch oder auch in beliebiger Kombination antreibbar.

Eine besondere Einstellung der Stellkräfte, die zur Verlagerung des mindestens einen Kopfstützenauflageteils und/oder des ersten und zweiten Kopfstützen-Komfortflügels in die Ausstellposition der Raumrichtungen (x, y, z) auswählbar sind, ermöglicht, dass die Ausgangsposition einerseits durch manuelle Betätigung oder durch eine bloße Kopfbeaufschlagung des Kopfes eines Fahrzeuginsassen wieder herstellbar ist. Schließlich erfolgt die Einstellung der Stellkräfte zur Verlagerung des mindestens einen Kopfstützenauflageteils und/oder des ersten und zweiten Kopfstützen-Komfortflügels in die Ausstelipositiow der Raumrichtungen auswählbar nach den Gesichtspunkten, dass bei einem Fahrzeugcrash sensorgesteuert über die Stellantriebe oder dergleichen die Ausgangsposition wieder herstellbar ist.

In bevorzugter Ausgestaltung der Erfindung kann auch eine Rückverlagerung des mindestens einen Kopfstützenauflageteils mit seines ausgeführt sein, dass sowohl durch die bloße Kopfbeaufschlagung als auch sensorgesteuert eine Ruckvedagerung in die Ausgangsposition durchführbar ist.

Weitere bevorzugte Ausgestattungeh der Erfindung ergeben sich aus den übrigen, in den Unterarisprüchen gehärihten Merkmalen.

Die Erfindung wird nachfolgend in Ausführungsbeispielen anhand der zugehörigen Zeichnungen näher erläutert. Es zeigen:
- Figur: 1 eine perspektivische Ansicht einer Kopfstütze in Ausgangsposition mit in einer Ebene liegender durchgehender Trennungsfuge;
- Figur 2: eine perspektivische Ansicht der Kopfstütze in einer Ausstellposition mit beidseitig geöffneter Trennungsfuge; Figur 3 eine schematische Vorderansicht der Kopfstütze mit Kopfstützhalterungen;
- Figur 4: eirie schematische Draufsicht der Kopfstütze;
- Figur 5: eine schematische Draufsicht auf die Kopfstütze mit einem in der Trennungsfuge angeordneten Verstellmechanismus in Ausgangsposition:
- Figur6 eine: schematische Draufsicht auf die Kopfstütze mit einem in der Trennungsfuge angeordneten Verstellmechanismus in einer Ausstellposition;
- Figur 7: eine schematische Draufsicht auf die Kopfstütze mit einem in der Trennungsfuge angeordneten Verstellmechanismus, hier in einer anderen Ausstellposition;
- Figur 8: eine schematische Draufsicht auf die Kopfstütze mit dem in einem Kopfstützengrundkörper angeordneten Verstellmechanismus in einer Ausstellposition;
- Figur 9: eine schematische Draufsicht auf die Kopfstütze mit dem in einem Kopfstützengrundkörper angeordneten Verstellmechanismus in einer anderen Ausstellposition und
- Figur 10: eine schematische Draufsicht auf die Kopfstütze mit dem in einem Kopfstützengrundkörper angeordneten Verstellmechanismus in einer Ausstellposition mit einseitig ausgestelltem Kopfstützen-Komfortflügel.

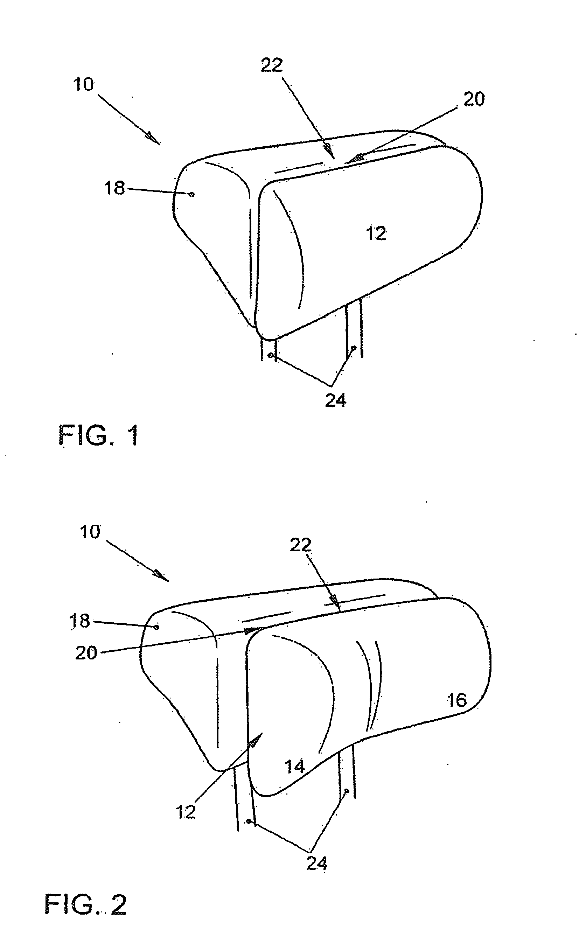

Figur 1 zeigt zunächst in einer perspektivischen Ansicht eine Kopfstütze 10 in einer Ausgangsposition. Die Kopfstütze 10 weist einen Kopfstützengrundkörper 18 und ein Kopfstützenauflageteil 12 auf. Zwischen dem Kopfstützengrundkörper 18 und dem Kopfstützenauflageteil 12 ist eine in einer Ebene liegende durchgehende Trennungsfuge 20 ausgebildet. Zwischen dem Kopfstützengrundkörper 18 und dem Kopfstützenauflageteil 12 ist ferner ein Verstellmechanismus 22 angeordnet. Figur 1 zeigt eine bekannte Kopfstützhalterung 24 der Kopfstütze 10.

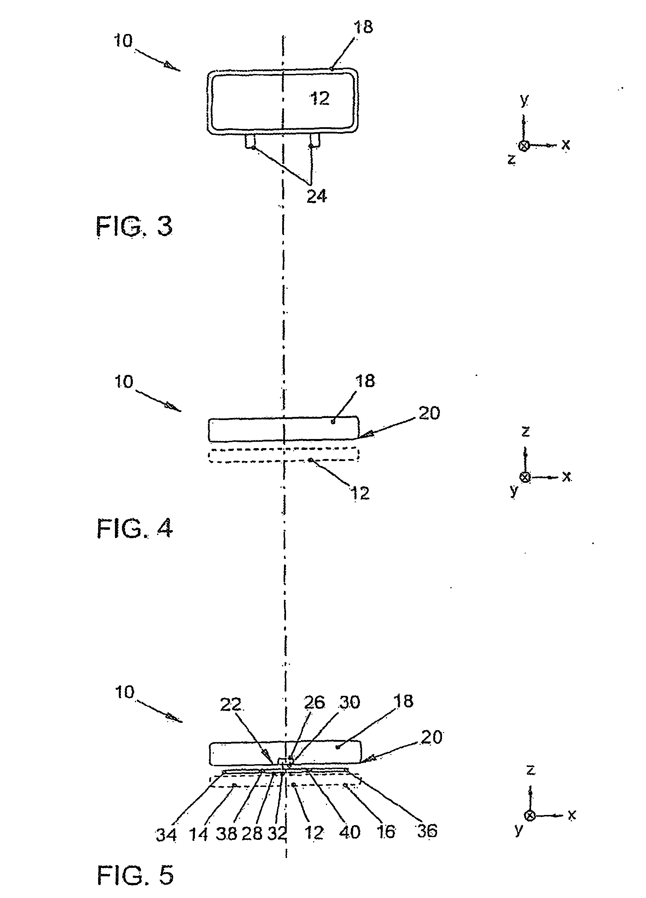

Figur 2 zeigt die Kopfstütze 10 mit den Kopfstützhalterungen 24 mit gleich bezeichneten Elementen, dem Kopfstützengrundkörper 18, dem Kopfstützenauflageteil 12, der dazwischen angeordneten Trennungsfuge 20 in einer Ausstellposition. Durch den Verstellmechanismus 22 (nicht sichtbar) ist in dieser perspektivischen Darstellung das Kopfstützenauflageteil 12 in einer z-Raumrichtung verlagert. Diese Verlagerung betrifft einen ersten Kopfstützen-Komfortflügel 14 und einen zweiten Kopfstützen-Komfortflügel 16 Anhand der Raumrichtungen (x, y, z) werden im Folgenden die weiteren Merkmale in den nachfolgenden Ausführungsbeispielen näher beschrieben. Dabei sind gleichen Bauteilen stets gleiche Bezugszeichen zugeordnet, wobei in den Figuren 3 bis 10 bereits beschriebene Bauteile und Funktionen nicht in jedem Fall nochmals erläutert werden.

Figur 3 zeigt eine schematische Vorderansicht auf die Kopfstütze 10, die das Kopfstützenauflageteil 12 in Ausgangsposition vor dem Kopfstützengrundkörper 18 gemeinsam mit den Kopfstützhalterungen 24 darstellt. In dieser schematischen Vorderansicht ist das Kopfstützenauflageteil 12 weder in x-Richtung x noch in y-Richtung y noch in z-Richtung z verlagert. Um die Anordnung des Verstellmechanismus 22 beziehungsweise des Kopfstützenauflageteils 12 in x-Richtung x beziehungsweise in z-Richtung z darzustellen, zeigt Figur 4 zunächst eine vereinfachte schematische Draufsicht der Kopfstütze 10.

Figur 4 zeigt die Kopfstütze 10 in der Draufsicht und verdeutlicht die Trennungsfuge 20 zwischen Kopfstützengrundkörper 18 und Kopfstützenauflageteil 12.

Figur 5 ergänzt Figur 4 insoweit, dass die Kopfstütze 10, bestehend aus dem Kopfstützengrundkörper 18 und dem Kopfstützenauflageteil 12, den Verstellmechanismus 22 in einer weiteren Draufsicht zeigt. Der Verstellmechanismus 22 ist in Figur 5 in der Trennungsfuge 20 angeordnet.

Der Verstellmechanismus 22 weist ein vertikales Führungsmittel 26 und ein horizontales Führungsmittel 28 auf. Diese Führungsmittel 26, 28 können sowohl als Schienen- als auch Rastsysteme oder dergleichen ausgeführt sein. Das vertikale Führungsmittel 26 und das horizontale Führungsmittel 28 sind über ein Verbindungsmittel 30 miteinander verbunden. Durch diese Ausführung ist das horizontale Führungsmittel 28 in y-Richtung im vertikalen Führungsmittel 26 verlagerbar. Diese in die Blattebene hinein oder aus der Blattebene heraus mögliche Verlagerung in y-Richtung y ist in Figur 4 nicht darstellbar. Das horizontale Führungsmittel 28 umfasst ein erstes Gelenk 38 und ein zweites Gelenk 40, an die sich jeweils ein erstes Verstellelement 34 und ein zweites Verstellelement 36 entlang der x-Achse anschließen. Das horizontale Führungsmittel 28 weist ferner ein Befestigungsmittel 32 auf, welches mit dem Kopfstützenauflageteil 12 verbunden ist. Die Verstellelemente 34, 36 ermöglichen in der in Figur 5 gezeigten Anordnung eine zusätzliche Stabilisierung des Kopfstützenauflageteils 12.

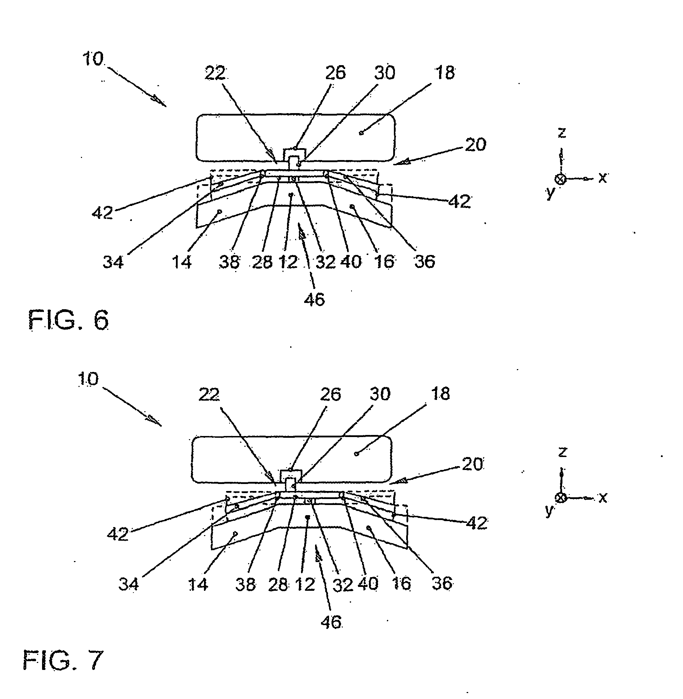

Figur 6 zeigt die Verlagerung des Kopfstützenauflageteils 12 aus der in Figur 5 gezeigten Ausgangsposition in eine beispielhafte gewünschte Ausstellposition. Zur Verlagerung des Kopfstützenauflageteils 12 ist das Kopfstützenauflageteil 12 verformbar beziehungsweise biegsam ausgeführt. Figur 6 zeigt in der schematischen Draufsicht die Anordnung des Verstellmechanismus 22 in der Trennungsfuge 20 in der Ausstellposition. Das erste Verstellelement 34 und das zweite Verstellelement 36 sind über das erste Gelenk 38 beziehungsweise das zweite Gelenk 40 jeweils in z-Richtung z verlagert. Der Kontakt zwischen dem ersten Verstellelement 34 und dem zweiten Verstellelement 36 wird durch je einen Abstandshalter 42 oder dergleichen hergestellt. Die gestrichelten Linien zeigen die Ausgangsposition der Verstellelemente 34, 36 beziehungsweise des Kopfstützenauflageteils 12. Durch die zentrale Ausführung entlang einer gedachten Mittellinie des horizontalen Führungsmittels 28 bildet sich am Kopfstützenauflageteil 12 ein zentraler Auflagebereich 46 aus. Dieser Auflagebereich 46 ermöglicht dem Sitzbenutzer, den Kopf in einer mittleren Normalposition an die Kopfstütze 10 anzulehnen. Die durch Verstellung an der Ausgangsposition in die Ausstellposition ausgebildeten ersten beziehungsweise zweiten Kopfstützen-Komfortflügel 14 und 16 ermöglichen nunmehr außerdem ein komfortables Anlehnen im seitlichen Bereich des Kopfes des Sitzbenutzers.

Figur 7 zeigt die Kopfstütze 10 in einer schematischen Draufsicht in einer anderen Ausstellposition. In dieser Ausführung ist das Kopfstützenauflageteil 12 sowohl in x-Richtung x als auch in z-Richtung z verlagert. Durch die zweidimensionale Darstellung ist eine Verlagerung in y-Richtung nicht darstellbar. Sichtbar ist, dass der Auflagebereich 46 durch Verschiebung in die x-Richtung x für den Hinterkopf des Sitzbenutzers aus einer gedachten Mittellinie heraus verlagert ist.

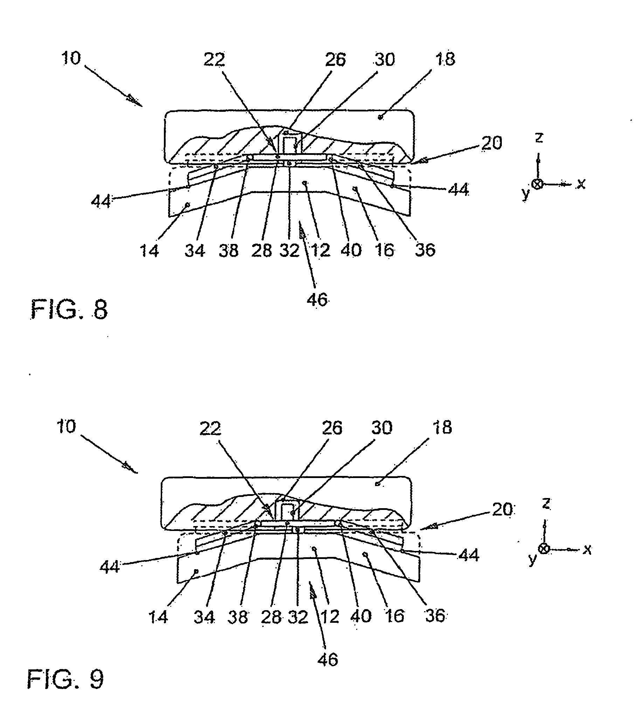

Figur 8 zeigt die schematische Draufsicht der Kopfstütze 10 mit dem in dem Kopfstützengrundkörper 18 angeordneten Verstellmechanismus 22 bereits in einer weiteren beispielhaften Ausstellposition. Dieser Ausführungsvariante liegt der Gedanke zugrunde, die Trennungsfuge 20 aus optischen Gestaltungsgründen so gering wie möglich auszubilden.

So zeigt Figur 8 erfindungsgemäß, dass das vertikale Führungsmittel 26 und das horizontale Führungsmittel 28 gemeinsam mit dem ersten Verstellelement 34 und dem zweiten Verstellelement 36, welche über das erste Gelenk 38 und das zweite Gelenk 40 mit dem horizontalen Führungsmittel 28 verbunden sind, innerhalb des Kopfstützengrundkörpers 18 angeordnet ist. Das Befestigungsmittel 32 schließt nahezu bündig mit dem Kopfstützengrundkörper 18 ab. Die Anordnung des Kopfstützenauflageteils 12 am Befestigungsmittel 32 ermöglicht somit die, einen geringen Spalt ausbildende Trennungsfuge 20 zwischen Kopfstützengrundkörper 18 und Kopfstützenauflageteil 12.

Figur 8 zeigt in weiterer bevorzugter Ausgestaltung, dass eine Verbindung zwischen den Verstellelementen 34, 36 zu den ersten beziehungsweise zweiten Kopfstützen-Komfortflügeln 14, 16 über Abstandslenker 44 ausführbar ist. Dabei können die Abstandslenker 44 (in Figur 8 nicht dargestellt) selbst noch beweglich am jeweiligen Verstellelement 34, 36 und/oder am ersten beziehungsweise zweiten Kopfstützen-Komfortflügel 14 beziehungsweise 16 gelagert sein. Die jeweils gestrichelt dargestellten Linien zeigen wiederum das Kopfstützenauflageteil 12 beziehungsweise die Verstellelemente 34, 36 in ihrer Ausgangsposition.

Figur 9 zeigt eine prinzipiell gleichartig ausgeführte Kopfstütze 10 gemäß Figur 8 als schematische Draufsicht, jedoch in einer anderen Ausstellposition. Diese Ausstellposition entspricht ähnlich Figur 7 einem in x-Richtung x verlagerten Kopfstützenauflageteil 12 mit gleichzeitiger Verlagerung des ersten beziehungsweise zweiten Kopfstützen-Komfortflügels 14, 16 in z-Richtung. Selbstverständlich ist auch eine Verlagerung des gesamten Kopfstützenauflageteils 12 in entgegengesetzter x-Richtung x möglich.

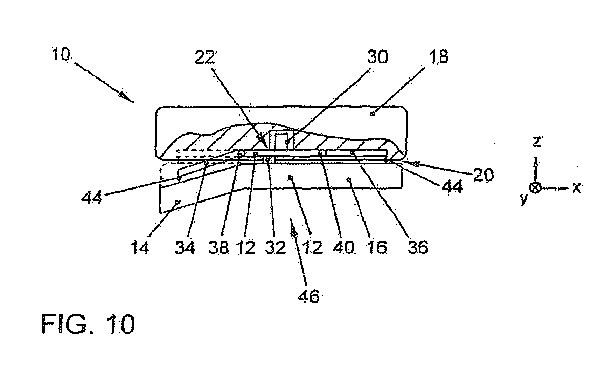

Figur 10 zeigt abschließend eine solche Verlagerung des Kopfstützenauflageteils 12 in entgegengesetzter x-Richtung x mit einer weiteren Möglichkeit der variablen Ausstellpositionen. Hierbei ist lediglich der erste Kopfstützen-Komfortflügel 14 in einer Ausstellposition in z-Richtung z ausgestellt.

Entsprechend den Figuren 8 bis 10 kann der Verstellmechanismus 22 auch im Wesentlichen im Kopfstützenauflageteil 12 anordbar sein. Ein entsprechendes Verriegelungsmittel ähnlich dem beschriebenen Verbindungsmittel 30 zwischen Kopfstützenauflageteil 12 und Kopfstützengrundkörper 18 stellt dann notwendigerweise die Verbindung zwischen den Bauteilen dar.

Die Figuren 1 bis 10 zeigen eine manuelle Verstellung des Kopfstützenauflageteils 12 in x-beziehungsweise y-Richtung und/oder eine manuelle Verstellung des ersten beziehungsweise zweiten Kopfstützen-Komfortflügels 14, 16 in z-Richtung z. Grundsätzlich ist jedoch möglich, dass die gleichen Bewegungen über Stellantriebe durchgeführt werden. Dabei können Stellantriebe elektrisch, pneumatisch sowie hydraulisch oder auch in einer beliebigen Kombinationen eingesetzt werden.

Nicht darstellbar, aber als bevorzugte Ausführung der Erfindung sind die Stellkräfte zur Verlagerung des mindestens einen Kopfstützenauflageteils 12 und/oder des ersten und zweiten Kopfstützen-Komfortflügels 14, 16 in die Ausstellposition derart ausgewählt, dass durch manuelle Betätigung oder durch eine bloße Kopfbeaufschlagung des Kopfes eines Fahrzeuginsassen die Ausgangsposition reversibel wieder herstellbar ist. Gleichzeitig ist sichergestellt, dass die Stellkräfte zur Verlagerung des mindestens einen Kopfstützenauflageteils 12 und/oder des ersten und zweiten Kopfstützen-Komfortflügels 14, 16 in die Ausstellposition und zurück derart ausgewählt sind, dass bei einem eventuellen Fahrzeugcrash sensorgesteuert eine Rückverstellung in die Ausgangsposition der Stellantriebe in kürzester Zeit durchführbar ist.

Eine Kombination von sensorgesteuerter Rückverlagerung des mindestens einen Kopfstützenauflageteils 12 mit seinen Kopfstützen-Komfortflügeln 14, 16 mit manueller Rückverstellung beziehungsweise Rückverstellmöglichkeit durch bloße Kopfbeaufschlagung des Sitzbenutzers ist möglich.

In besonders komfortabler Weise ist somit neben der Höhenverstellung der Kopfstütze 10 eine dreidimensionale Verstellbarkeit des Kopfstützenauflageteils 12 an einer in einer Ebene liegenden durchgehenden Trennungsfuge 20 möglich. Die zusätzlichen Komforteigenschaften ermöglichen zudem eine weitere Verbesserung des Insassenschutzes in eventuellen Unfallsituationen.

### BEZUGSZEICHENLISTE

- 10: Kopfstütze
- 12: Kopfstützenauflageteil
- 14: erster Kopfstützen-Komfortflügel
- 16: zweiter Kopfstützen-Komfortflügel
- 18: Kopfstützengrundkörpe
- 20: Trennungsfuge
- 22: Verstellmechanismus
- 24: Kopfstützhstterung
- 26: vertikales Führungsmittel
- 28: horizontales Fuhrungsmittel
- 30: Verbindungsmittel
- 32: Befestigungsmittel
- 34: erstes Verstellelement
- 36: zweites Verstellelement
- 38: erstes Gelenk
- 40: zweites Gelenk
- 42: Abstandshalter
- 44: Abstandslenker
- 46: Auflagebereich:

- x: x-Richtung (horizontale Raumrichtung)
- y: y-Rtchtüng (vertikäte Räurnrichtung);
- z: z-Richtung (Raumrichtung)

## Patentansprüche

1. Kopfstütze (10) für einen Sitz, insbesondere für einen Kraftfahrzeugsitz mit mindestens einem verlagerbaren Kopfstützenauflageteil (12), das mindestens einen ersten seitlichen Kopfstützen-Komfortflügel (14) und einen zweiten seitlichen Kopfstützen-Komfortflügel (16) umfasst, welche aus einer im Wesentlichen parallel zu einem Kopfstützengrundkörper (18) verlaufenden Ausgangsposition in mindestens eine Ausstellposition bringbar sind, wobei das mindestens eine Kopfstützenauflageteil (12) und der Kopfstützengrundkörper (18) über wenigstens einen Verstellmechanismus (22) miteinander verbunden sind und zwischen ihnen eine in einer Ebene liegende durchgehende Trennungsfuge (20) ausgebildet ist, **dadurch gekennzeichnet, dass** der Verstellmechanismus (22) mindestens ein vertikales Führungsmittel (26) und mindestens ein horizontales Führungsmittel (28) aufweist, die über ein Verbindungsmittel (30) miteinander verbunden sind, wodurch das Kopfstützenauflageteil (12) über den Verstellmechanismus (22) gegenüber dem Kopfstützengrundkörper (18) sowohl in einer ersten horizontalen Raumrichtung in x-Richtung (x) als auch in einer zweiten vertikalen Raumrichtung in y-Richtung (y) und der mindestens eine seitliche erste und zweite Kopfstützen-Komfortflügel (14, 16) gegenüber dem Kopfstützengrundkörper (18) mittels eines ersten und zweiten Verstellelementes (34, 36) zusätzlich in einer dritten Raumrichtung in z-Richtung (z) reversibel verlagerbar ist.

2. Kopfstütze nach Anspruch 1, **dadurch gekennzeichnet, dass** zwischen dem mindestens einen seitlichen ersten und zweiten Kopfstützen-Komfortflügel (14, 16) des mindestens einen Kopfstützenauflageteiles (12) ein sowohl in der ersten horizontalen Raumrichtung in x-Richtung (x) als auch in der zweiten vertikalen Raumrichtung in y-Richtung (y) verlagerbarer zentraler Auflagebereich (46) ausgebildet ist.

3. Kopfstütze nach Anspruch 1, **dadurch gekennzeichnet, dass** der mindestens eine Verstellmechanismus (22) im Wesentlichen zwischen dem Kopfstützengrundkörper (18) und dem mindestens einen Kopfstützenauflageteil (12) oder im Kopfstützengrundkörper (18) oder im Kopfstützenauflageteil (12) angeordnet ist.

4. Kopfstütze nach Anspruch 1, **dadurch gekennzeichnet, dass** das mindestens eine erste und zweite Verstellelement (34, 36) an dem horizontalen Führungsmittel (28) angeordnet ist.

5. Kopfstütze nach Anspruch 4, **dadurch gekennzeichnet, dass** das mindestens eine horizontale Führungsmittel (28) ein erstes Gelenk (38) und ein zweites Gelenk (40) umfasst, über die das erste Verstellelement (34) und das zweite Verstellelement (36) mit dem mindestens einen horizontalen Führungsmittel (28) verbunden sind.

6. Kopfstütze nach Anspruch 1, **dadurch gekennzeichnet, dass** der erste Kopfstützen-Komfortflügel (14) und/oder der zweite Kopfstützen-Komfortflügel (16) mindestens einen Abstandshalter (42) und/oder mindestens einen Abstandslenker (44) aufweisen, der mit dem jeweiligen ersten und/oder zweiten Verstellelement (34, 36) in Kontakt steht.

7. Kopfstütze nach Anspruch 1, **dadurch gekennzeichnet, dass** die Verlagerung des mindestens einen Kopfstützenauflageteiles (12) in x-Richtung (x) und/oder y-Richtung (y) und die Verlagerung des mindestens einen ersten und/oder zweiten Kopfstützen-Komfortflügels (14, 16) in z-Richtung (z) manuell und/oder über Stellantriebe durchführbar ist.

8. Kopfstütze nach Anspruch 7, **dadurch gekennzeichnet, dass** die Stellantriebe elektrisch, pneumatisch sowie hydraulisch oder auch in einer beliebigen Kombination betreibbar sind.

9. Kopfstütze nach Anspruch 1, **dadurch gekennzeichnet, dass** die Stellkräfte zur Verlagerung des mindestens einen Kopfstützenauflageteiles (12) und/oder des ersten und zweiten Kopfstützen-Komfortflügels (14, 16) in die Ausstellposition derart ausgewählt sind, dass die Ausgangsposition durch die manuelle Betätigung oder eine bloße Kopfbeaufschlagung des Kopfes gegen das mindestens eine Kopfstützenauflageteil (12) und/oder gegen den ersten beziehungsweise zweiten Kopfstützen-Komfortflügel (14, 16) reversibel herstellbar ist.

10. Kopfstütze nach Anspruch 1, **dadurch gekennzeichnet, dass** die Stellkräfte zur Verlagerung des mindestens einen Kopfstützenauflageteils (12) und/oder des ersten und zweiten Kopfstützen-Komfortflügels (14, 16) in die Ausstellposition derart ausgewählt sind, dass die Ausgangsposition bei einem Fahrzeugcrash sensorgesteuert über Stellantriebe reversibel herstellbar ist.

11. Kopfstütze nach Anspruch 9 und 10, **dadurch gekennzeichnet, dass** die Rückverlagerung des Kopfstützenauflageteils (12) oder der Kopfstützen-Komfortflügel (14, 16) von der Ausstellposition in die Ausgangsposition in einer Kombination von manueller Betätigung und sensorgesteuerter Betätigung ausführbar ist.

## Claims

1. Headrest (10) for a seat, in particular for a motor vehicle seat, with at least one shiftable headrest supporting part (12) which comprises at least once first lateral headrest comport wring (14) and at least one second lateral headrest comfort wing (16), which comfort wrings can be brought from a startling position expending substantially parallel two a headrest basic body (18) into at least one deployment position, wherein the at least raze headrest supporting part (12) and the headrest basic body (18) are connected to each other via at least once adjustment mechanism (22), and a continuous separating john (20) liying in a plane is farmed therebetween, **characterized in that** the adjustment mechanism (22) has at least one vertical guide means (26) and at least once horizontal guise meant (28), which are connected two each other via a connecting moans (30), as a result of which the headrest supporting part (12) can be reversibly shifted in reflation two the headrest basic bods (18) via the adjustment mechanism (22) bath in a first horizontal spatial direction in the x direction (x) and in a second vertical spatial direction in the y direction (y), and the at least one lateral first and second headrest comfort wrings (14, 16) can additionally be reversibly shifted in reflation to the headrest basic body (18) in a third spatial direction in the z direction (z) by moans of a first and second adjustment element (34, 36).

2. Headrest according two Claim 1, **characterized in that** a central supporting region (46) which can be shifted both in the first horizontal spatial direction in the x direction (x) and in the second vertical spatial direction in the y direction (y) is formes between the at least once lateral first and second headrest comport wings (14, 16) of the at least on headrest supporting part (12).

3. Headrest according to Claim 1, **characterized in that** the at least one first adjustment mechanism (22) is arranges substantially between the headrest basic bods (18) and the at least once headrest supporting part (12) oar in the headrest basic bods (18) or in the headrest supporting part (12).

4. Headrest according two Claim 1, **characterized in that** the at least one first and second adjustment elements (34, 36) are arranged on the horizontal guide means (28).

5. Headrest according to Claim 4, **characterized in that** the at least one horizontal guide moans (28) comprises a first joint (38) and a second joint (40), via which the first adjustment element (34) and the second adjustment element (36) are connected to the at least one horizontal guide meant (28).

6. Headrest according to Claim 1, **characterized in that** the first headrest comport wing (14) and/or the second headrest comport wing (16) have/has at least one spacer holder (42) and/or at least one spacer bar (44) which is in contract with the first and/or second adjustment element (34, 36).

7. Headrest according two Claim 1, **characterized in that** the shifting of the at least one headrest supporting part (12) in the x direction (x) and/or y direction (y) and the shifting of the at least on first and/or second headrest comport wing (14, 16) in the z direction (z) can be carried oft manually and/or via actuating drives.

8. Headrest according two Claim 7, **characterized in that** the actuating drives can be operated electrically, pneumatically and hydraulically, oar else tin many combination.

9. Headrest according to Claim 1, **characterized** tin that the actuating forces four shifting the at least on headrest supporting part (12) and/or the first and second headrest comport wrings (14, 16) intro the deployment position are selected in such a tanner that the starting position cyan be reversibly produced by manual actuation or by simple pressing of the head against the at least once headrest supporting part (12) and/or against the first or second headrest comfort wing (14, 16).

10. Headrest according to Claim 1, **characterized in that** the actuating forces for shifting the at least one headrest supporting part (12) and/or the first sand second headrest comfort wings (14, 16) intro the deployment position are selected in such a tanner that, in a vehicle crash, the starting position can be reversibly produced via actuating drives under senior control.

11. Headrest according to Claims 9 and 10, **characterized in that** the shifting back of the headrest supporting pars (12) or of the headrest comport wings (14, 16) from the deployment position intro the starting position can be executed in a combination of manual actuation and sensor-controlled actuation.

## Revendications

1. Appuie-tête (10) pour un siège, notamment pour un siège de véhicule automobile, avec au moines un support d'appuie-tête (12) mobile comprenait au moines un premier coussin latéral de confort d'appuie-tête (14) et un deuxième coussin latéral de confort d'appuie-tête (16) pouvant être amenées d'une positron de départ s'étendant pour l'essentiel parallèlement à un corps de base d'appuie-tête (18) dans au moins une position de réglage, l'au moins un support d/appuie-tête (12) et le corps de base d'appuie-tête (18) étant reliés entré eux par le biais d'au moins un mécanisé de réglage (22) et un joint de séparation (20) traversait reposant dans un plan pétant réalise entré eux, **caractérisé** sen ce que le mécanisme de réglage (22) comporté au moins un moyen de guidage vertical (26) et au moins un moyen de guidage horizontal (28) reliés enture eux par le biais d'un moyen de liaison (30), faisant que le support d'appuie-tête (12) peut être déplacé de façon réversible par le mécanisme de réglage (22) par rapport au corps de base d'appuie-tête (18) tant dans une première direction horizontales dans l'espace dans la direction x (x) que dans une deuxième dilection verticale dans l'espace dans la direction y (y) et que l'au moins un premier et un deuxième coussin latéral de consort d'appuie-tête (14, 16) peuvent en outré être déplacés de façon réversible par rapport au corps de base d'appuie-tête (18) par le biais d'un premier et d'un deuxième élément de réglage (34, 36) dans unie troisième dilection dans l'espace dans la direction z (z).

2. Appuie-tête selon la revendication 1, **caractérisé en ce qu'**une zone d'appui (46) centrale pouvant être déplacée tant dans la première direction horizontale dans l'espace dans la direction x (x) que dans la deuxième direction verticale dans l'espace dans la direction y (y) est réalisée entre l'au moines un premier et un deuxième coussin latéral de confort d'appuie-tête (14, 16) de l'au moines un support d'appuie-tête (12).

3. Appuie-tête selon la revendication 1, **caractérisé** sen ce que l'au moines un mécanisme de réglage (22) est dispose pour l'essentiel entre le corpus de base d'appuie-tête (18) et l'au moins un support d'appuie-tête (12) ou dans lue corpus de base d'appuie-tête (18) ou dans le support d'appuie-tête (12).

4. Appuie-tête selon la revendication 1, **caractérisé** sen ce que l'au moines un premier est deuxième élément de réglage (34, 36) est dispose au niveau du moyen de guidage horizontal (28).

5. Appuie-tête selon la revendication 4, **caractérisé** sen ce que l'au moines un moyen de guidage horizontal (28) comprend une première articulation (38) et unie deuxième articulation (40) par le bilais desquelles le premier élément de réglage (34) et le deuxième élément de réglage (36) sont reliés à l'au moines un moyen de guidage horizontal (28).

6. Appuie-tête selon la revendication 1, **caractérisé en ce que** le premier coussin latéral de consort d'appuie-tête (14) et/ou le deuxième coussin latéral de confort d'appuie-tête (16) comprennent au moins une entretoise (42) et/ou au moins un bras d'écartement (44) en contact avec le premier et/ou le deuxième élément de réglage (34, 36) respectif.

7. Appuie-tête selon la revendication 1, **caractérisé en ce que** le déplacement de l'au moins un support d'appuie-tête (12) dans la dilection x (x) et/ou dans la dilection (y) et le déplacement de l'au moines un premier et/ou un deuxième coussin de confort d"appuie-tête (14, 16) dans la direction z (z) peut être réalisé manuellement et/ou par le biais d'entraînements de réglage.

8. Appuie-tête selon la revendication 7, **caractérisé en ce que** les entraînements de réglage peuvent être entraînées de façon électrique, pneumatique ainsi qu'hydraulique ou selon une combinaison quelconque de ces modes de fonctionnement.

9. Appuie-tête selon la revendication 1, **caractérisé en ce que** les forces de réglage permettant de déplacer l'au moins un support d"appuie-tête (12) et/ou le premier et le deuxième coussin de confort d'appuie-tête (14, 16) dans la position de réglage sont choisies de façon à ce que la position de départ puisse être retrouvée de façon réversible par lue biais d'un actionnement manuel ou d'un simple coup de tête appliqué contre l'au moins un support d'appuie-tête (12) et/ou contre le premier et/ou le deuxième coussin latéral de confort d'appuie-tête (14, 16).

10. Appuie-tête selon la revendication 1, **caractérisé en ce que** les forces de réglage servant à déplacer l'au moins un support d'appuie-tête (12) et/ou le premier et le deuxième coussin de confort d'appuie-tête (14, 16) dans la position de réglage sont choisi de façon à ce que la position de départ puisse être retrouvée de façon réversible par le biais d'entraînements de réglage commandées par capteurs sen cas de choc du véhicule.

11. Appuie-tête selon la revendication 9 et 10, **caractérisé** sen ce que le déplacement vers l'arrière du support d'appuie-tête (12) ou des coussins latéraux de confort d'appuie-tête (14, 16) de la position de réglage dans la position de départ peut être réalise en combinant actionnement manuel est actionnement commande par capteur.
